# FASCICULE DE BREVET EUROPEEN

(11) **EP 2 487 548 B1**
(45) Date de publication et mention de la délivrance du brevet: **10.01.2018**
(21) Numéro de dépôt: 11154143.9
(22) Date de dépôt: 11.02.2011
(51) Int. Cl.: G04B 37/04

(54) **Mécanisme de retournement en pivotement d'un boîtier**
Umkehrmechanismus der Drehbewegung eines Gehäuses
Mechanism for turning a casing over by a pivotal movement

(43) Date de publication de la demande: 15.08.2012
(73) Titulaire: Montres Breguet SA, 1344 L'Abbaye (CH)
(72) Inventeur: Goeller, Eric, 25370, Les Hôpitaux Vieux (FR)
(74) Mandataire: Giraud, Eric

(56) Documents cités:
- EP-A1- 1 902 641
- CH-A2- 700 958

## Description

### Domaine de l'invention

L'invention concerne un mécanisme de retournement en pivotement, autour d'un axe de pivotement, entre au moins deux positions de repos, d'un boîtier, par rapport à une structure porteuse.

L'invention concerne encore une structure porteuse pour pièce d'horlogerie ou de bijouterie-joaillerie, comportant au moins une chape à laquelle est fixé un tel mécanisme de retournement.

L'invention concerne encore une pièce d'horlogerie ou de bijouterie-joaillerie, comportant au moins un boîtier pivotant, autour d'un axe de pivotement, entre au moins deux positions de repos, et comportant au moins un tel mécanisme de retournement.

L'invention concerne le domaine de l'équipement de la personne, et plus précisément les domaines de la bijouterie, de la joaillerie, et de l'horlogerie.

### Arrière-plan de l'invention

Dans le domaine de l'horlogerie, ou celui de la bijouterie-joaillerie, il est connu de réaliser des bracelets à transformation, en particulier par glissement ou retournement d'un boîtier de montre comportant des affichages différents sur chacune de ses faces, ou encore d'un bijou présentant différents aspects sous différentes faces, l'une des faces pouvant, encore consister en une protection de la pièce d'horlogerie ou du bijou lors d'activités particulières, comme en voyage ou lors d'une pratique sportive, ou autre.

On connaît une demande de brevet FR 2 633 496 au nom de FENDLER, qui divulgue un mécanisme à demi-couvercles glissant dans des glissières, et dont l'ouverture, permettant la visualisation d'un affichage, est réalisée par des ressorts libérés sous l'action d'un poussoir.

Le document EP 1 902 641 A1 au nom de MONTRES BREGUET SA décrit un boîtier réversible pour montre-bracelet, comportant une cage pivotante. Il existe des positions où la montre ne peut pas se retourner, et d'autres positions où elle peut être retournée, entre différentes positions d'indexation. Un agencement particulier de ressorts permet, d'une part d'autoriser la libération, et d'autre part d'assurer un blocage ferme en position une fois la position d'indexation atteinte. C'est l'utilisateur qui manoeuvre la montre pour la faire pivoter, car il n'y a pas d'élément moteur. Aucun composant de ce mécanisme n'assure l'éloignement/rapprochement des positions indexées.

### Résumé de l'invention

L'invention se propose de pallier les inconvénients de l'art antérieur, en proposant un mécanisme que l'utilisateur puisse actionner de façon simple et sécurisée, sans enlever l'objet de son poignet, et en limitant les manipulations sur le boîtier au minimum.

A cet effet, l'invention concerne un mécanisme de retournement en pivotement, autour d'un axe de pivotement, entre au moins deux positions de repos, d'un boîtier, par rapport à une structure porteuse, selon la revendication 1. Selon une caractéristique de l'invention, ce mécanisme de retournement comporte, fixé audit élément de guidage complémentaire, au moins un berceau comportant au moins une surface de réception agencée pour coopérer de façon complémentaire, dans au moins une desdites positions de repos dudit boîtier, avec une surface d'appui que comporte, selon le cas, ledit boîtier ou ladite nacelle agencée pour recevoir ledit boîtier, chaque dite position de repos correspondant à une zone de fin de course de ladite came. Selon une caractéristique de l'invention, ce mécanisme de retournement comporte des moyens de verrouillage mobiles, qui sont agencés pour, dans une position de verrouillage, coopérer avec des moyens d'arrêt que comporte ledit élément de guidage, pour maintenir ladite surface d'appui en appui sur ladite surface de réception, et pour, dans une position de déverrouillage, autoriser l'éloignement relatif de ladite surface d'appui par rapport à ladite surface de réception. L'invention concerne encore une structure porteuse pour pièce d'horlogerie ou de bijouterie-joaillerie, comportant au moins une chape à laquelle est fixé un tel mécanisme de retournement. Selon une caractéristique de l'invention, cette structure porteuse constitue un bracelet comportant deux extrémités pour la fixation d'au moins un boîtier, dont au moins une desdites extrémités comporte un tel mécanisme de retournement. L'invention concerne encore une pièce d'horlogerie ou de bijouterie-joaillerie, comportant au moins un boîtier pivotant, autour d'un axe de pivotement, entre au moins deux positions de repos, et comportant au moins un tel mécanisme de retournement. Selon une caractéristique de l'invention, cette pièce d'horlogerie ou de bijouterie-joaillerie comporte une telle structure porteuse.

### Description sommaire des dessins

D'autres caractéristiques et avantages de l'invention apparaîtront mieux à la lecture de la description détaillée qui va suivre, en référence aux dessins annexés, où :
- la figure 1 représente, de façon schématisée, partielle, et en perspective, une pièce d'horlogerie comportant un boîtier monté pivotant autour d'un axe de pivotement par rapport à une structure porteuse, en l'occurrence un bracelet, par l'intermédiaire d'un mécanisme de retournement selon l'invention, représenté dans une position de repos du boîtier en appui sur un berceau, et où ce mécanisme est dans une position verrouillée;
- la figure 2 représente, de façon schématisée partielle, et en coupe longitudinale selon l'axe de pivotement du boîtier, la pièce d'horlogerie de la figure 1, un détail du même mécanisme de retournement au début d'une action de déverrouillage, le boîtier étant encore dans sa position de repos initiale, en appui sur son berceau ;

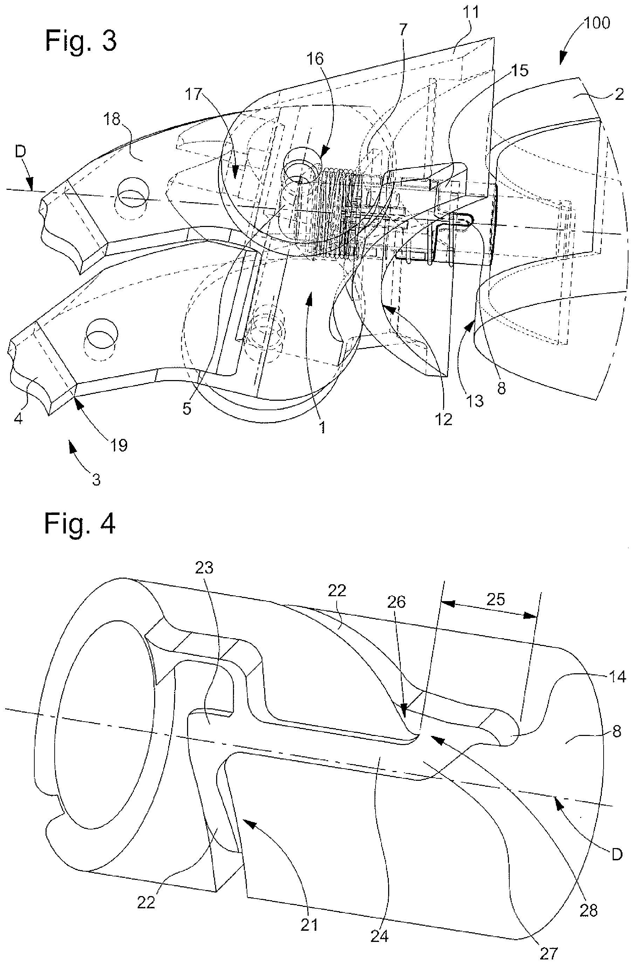

- la figure 3 représente, de façon analogue à la figure 1, la même pièce d'horlogerie après un retournement à 180° du boîtier, en position éloignée du berceau, et juste avant son rappel vers ce berceau dans une deuxième position de repos analogue mais opposée à celle de la figure 1 ;

- la figure 4 représente, de façon schématisée, et en perspective, une came que comporte le mécanisme de retournement selon l'invention et agencée pour piloter des mouvements de pivotement du boîtier pour son retournement, ainsi que des mouvements de translation pour autoriser son dégagement du berceau avant son pivotement, et son retour en appui sur le berceau après son pivotement ;
- la figure 5 représente, de façon schématisée, et en perspective, un élément de guidage complémentaire que comporte le mécanisme de retournement selon l'invention, pour coopérer avec la came et diriger avec celle-ci ces mouvements de pivotement et de translation du boîtier ;
- la figure 6 représente, de façon schématisée, partielle, et en section passant par l'axe de pivotement et en vue de dessous, la pièce d'horlogerie de la figure 1 dans la même position que dans la figure 1 ;
- la figure 7 représente, de façon schématisée, partielle, et en coupe longitudinale selon un axe de pivotement du boîtier, la pièce d'horlogerie de la figure 1, dans la position de la figure 1 ;
- la figure 8 représente, de façon schématisée, et en perspective, la pièce d'horlogerie de la figure 1, dans la position de la figure 2, juste avant le déverrouillage;
- la figure 9 représente, de façon analogue à la figure 8, la pièce d'horlogerie de la figure 1, après son déverrouillage et un début de pivotement du boîtier par rapport au berceau;
- la figure 10 représente, de façon analogue aux figures 8 et 9, la pièce d'horlogerie de la figure 1, sensiblement en fin de course de pivotement;
- la figure 11 représente, de façon schématisée, partielle, et en perspective vue de côté du boîtier, la pièce d'horlogerie de la figure 1 dans la même position que dans cette même figure 10;
- la figure 12 représente, de façon schématisée, partielle, et en section passant par l'axe de pivotement et en vue de dessous, la pièce d'horlogerie de la figure 1 dans la même position que dans cette même figure 10;

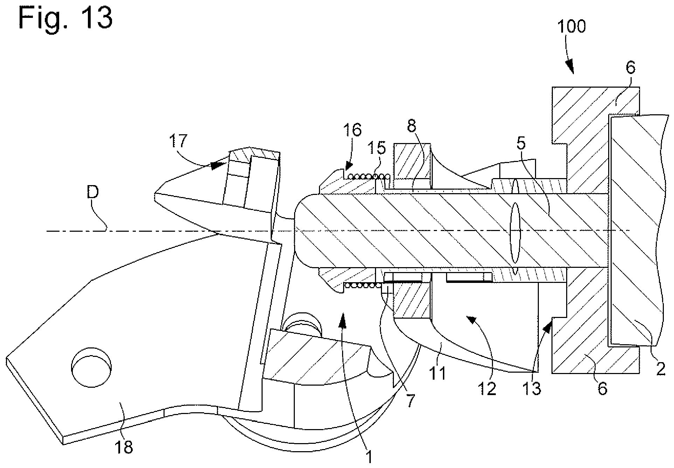

- la figure 13 représente, de façon schématisée, partielle, et en section passant par l'axe de pivotement et en élévation, la pièce d'horlogerie de la figure 1 dans la position de la figure 10.

### Description détaillée des modes de réalisation préférés

L'invention concerne le domaine de l'équipement de la personne, et plus précisément les domaines de la bijouterie, de la joaillerie, et de l'horlogerie.

L'invention concerne un mécanisme de retournement 1 en pivotement, autour d'un axe de pivotement D, entre au moins deux positions de repos, d'un boîtier 2, par rapport à une structure porteuse 3. Cette structure porteuse 3 peut notamment être constituée par tout ou partie d'un bracelet 4, ou similaire.

Un tel boîtier 2 peut consister en une montre, dont on souhaite pouvoir présenter à la demande ses différentes faces, ou encore en un bijou, ou similaire. Il peut aussi comporter des objets de la vie courante, tel téléphone portable, boîtier d'alarme, fréquencemètre, appareil de mesure, ou autre. Le boîtier 2 comporte au moins deux faces visibles. Si, dans le cas général il s'agit de présenter un tel objet sous la forme recto-verso, l'invention s'applique tout aussi bien à un boîtier dont on désire présenter une pluralité de faces, selon le désir ou le besoin du moment. L'invention est plus précisément décrite ici pour l'application préférée d'un pivotement à 180° du boîtier 2, et l'homme du métier saura sans peine extrapoler les caractéristiques décrites pour des nombres de facettes, et par conséquent des angles, différents.

Selon l'invention, tel que visible sur les figures, ce mécanisme 1 comporte au moins un élément de guidage 5, notamment un arbre, qui est agencé pour être rapporté, soit directement sur le boîtier 2, ou bien sur une nacelle 6 qui est agencée pour recevoir le boîtier 2, comme représenté sur la figure 14, et qui est prévu pivotant autour de l'axe de pivotement D.

Le mécanisme 1 comporte encore un élément de guidage complémentaire 7, agencé pour être fixé à la structure porteuse 3, ou à un prolongement de cette structure porteuse 3 tel qu'un maillon d'extrémité de bracelet ou une chape. Cet élément de guidage complémentaire 7 est agencé pour coopérer avec l'élément de guidage 5, notamment un arbre, par des surfaces de guidage complémentaires, que comportent respectivement l'élément de guidage 5, ou arbre, et l'élément de guidage complémentaire 7, qui autorisent un déplacement en translation selon l'axe de pivotement D ou/et un déplacement en pivotement autour de ce même axe de pivotement D, de l'élément de guidage 5, ou arbre, par rapport à l'élément de guidage complémentaire 7.

Ces déplacements en translation ou/et pivotement, de l'élément de guidage 5, par rapport à l'élément de guidage complémentaire 7, sont effectués sous l'action du mouvement relatif d'une came 8 que comporte l'élément de guidage 5, respectivement l'élément de guidage complémentaire 7, par rapport à un doigt 9 que comporte l'élément de guidage complémentaire 7, respectivement l'élément de guidage 5. Les surfaces de guidage, la came 8 et le doigt 9, sont agencés pour transformer un mouvement relatif de l'élément de guidage 5, par à l'élément de guidage complémentaire 7, longitudinalement selon l'axe de pivotement D, en un mouvement relatif de pivotement de l'un à l'autre par rapport à l'axe de pivotement D.

Les figures illustrent le cas où l'élément de guidage 5 est un arbre et a la forme d'un tourillon fixé sur un boîtier 2, et où il comporte cette came 8, qui sera décrite en détail plus loin. Sur ces figures, l'élément de guidage complémentaire 7 est une plaque faisant fonction de fourchette de rotation, et qui comporte au moins un doigt 9. Sur la version illustrée par les figures l'élément de guidage complémentaire 7 comporte deux doigts 9 opposés à 180° par rapport à l'axe de pivotement D, et la came 8 comporte deux pistes opposées à 180° coopérant chacune avec un de ces doigts 9.

Naturellement, l'invention peut adopter la configuration inverse, non illustrée par les figures, où l'élément de guidage complémentaire 7 est constitué par un arbre, et où l'élément de guidage 5 est constitué par un palier ou similaire.

De préférence, et tel que visible sur les figures, le mécanisme de retournement 1 comporte, fixé à l'élément de guidage complémentaire 7, au moins un berceau 11. Ce berceau 11 comporte au moins une surface de réception 12, qui est agencée pour coopérer de façon complémentaire, dans au moins une des positions de repos du boîtier 2, avec une surface d'appui 13 que comporte, selon le cas, le boîtier 2 ou la nacelle 6 agencée pour recevoir le boîtier 2, chaque position de repos correspondant à une zone de fin de course 14 de la came 8. On comprend que le berceau 11 et l'élément de guidage complémentaire 7 peuvent aussi constituer un ensemble monobloc. L'invention est illustrée ici pour le cas où le berceau 11 est existant, et comporte des cornes 110, il est alors aisé de rapporter sur ce berceau 11 un élément de guidage complémentaire 7 comportant le ou les doigts 9, sans avoir à réusiner le berceau 11, par ailleurs l'usinage est plus facile sur l'élément de guidage complémentaire 7, qui peut consister en une simple tôle formée, que sur un élément massif où des usinages internes sont difficiles et coûteux.

La mobilité relative de l'élément de guidage 5, ou arbre, par rapport à l'élément de guidage permet d'éloigner ou de rapprocher, selon la direction de l'axe de pivotement D, la surface d'appui 13 de la surface de réception 12.

On comprend que le choix du profil de la came 8 détermine la cinématique de retournement, le choix préféré d'une piste de came hélicoïdale permet un retournement régulier et sécurisé du boîtier 2, tout en ayant une course assez faible selon la direction de l'axe de pivotement D, qui est de préférence choisie radiale par rapport au boîtier 2 quand celui-ci possède un axe de révolution.

En raison de la grande valeur que peut représenter le boîtier 2 s'il est constitué de mouvements d'horlogerie ou/et de joyaux, la manoeuvre de pivotement ne doit pouvoir se produire que lors d'une action délibérée de l'utilisateur, et le mécanisme doit rester verrouillé entre deux actions de retournement. A cet effet, le mécanisme de retournement 1 comporte avantageusement des moyens de verrouillage mobiles 17.

Ces moyens de verrouillage mobiles 17 sont agencés pour, dans une position de verrouillage, coopérer avec des moyens d'arrêt 16 que comporte l'élément de guidage 5, ou arbre, pour maintenir la surface d'appui 13 en appui sur la surface de réception 12, et pour, dans une position de déverrouillage, autoriser l'éloignement relatif de la surface d'appui 13 par rapport à la surface de réception 12.

Pour préserver le boîtier 2, l'invention fait en sorte que l'utilisateur ait le moins possible de manipulations à effectuer, en contact avec ce boîtier.

A cet effet, selon l'invention, le mécanisme de retournement 1 comporte, entre l'élément de guidage 5, notamment un arbre, et l'élément de guidage complémentaire 7, des moyens de rappel élastique 15, par exemple sous la forme d'un ressort, pour créer un déplacement relatif entre le boîtier et ledit élément de guidage. Le ressort 15 est représenté sur les figures sous forme d'un ressort hélicoïdal, on peut y substituer un ressort-lame.

Ces moyens de rappel élastique 15, selon le mode de réalisation de l'invention, peuvent être conçus pour éloigner, ou au contraire pour rapprocher le boîtier 2 de l'élément de guidage complémentaire 7. Ils constituent des moyens moteurs pour mettre en mouvement relatif la came 8 par rapport au doigt 9, et assurent donc le pivotement du boîtier 2.

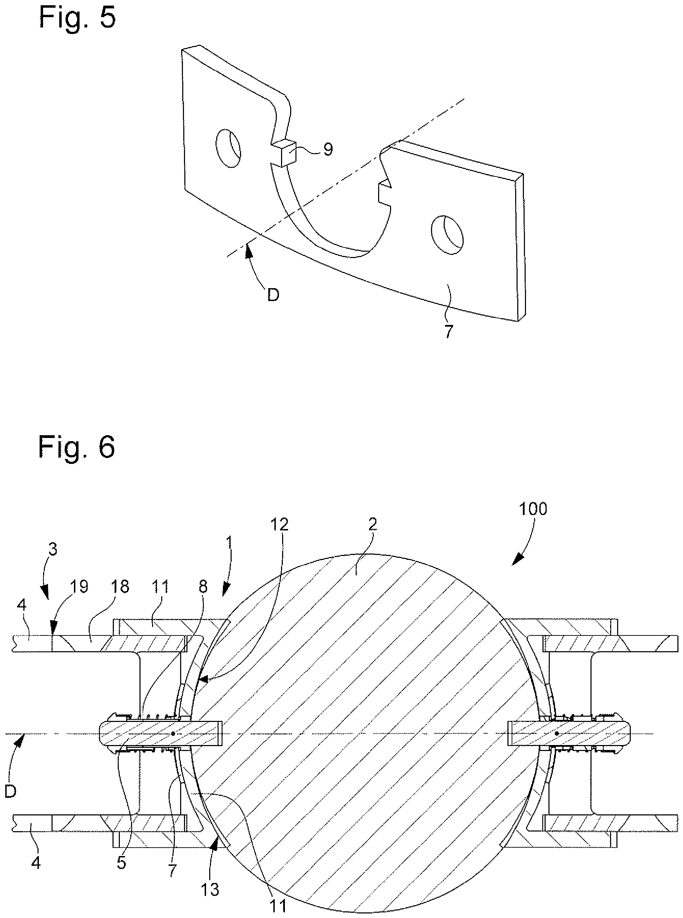

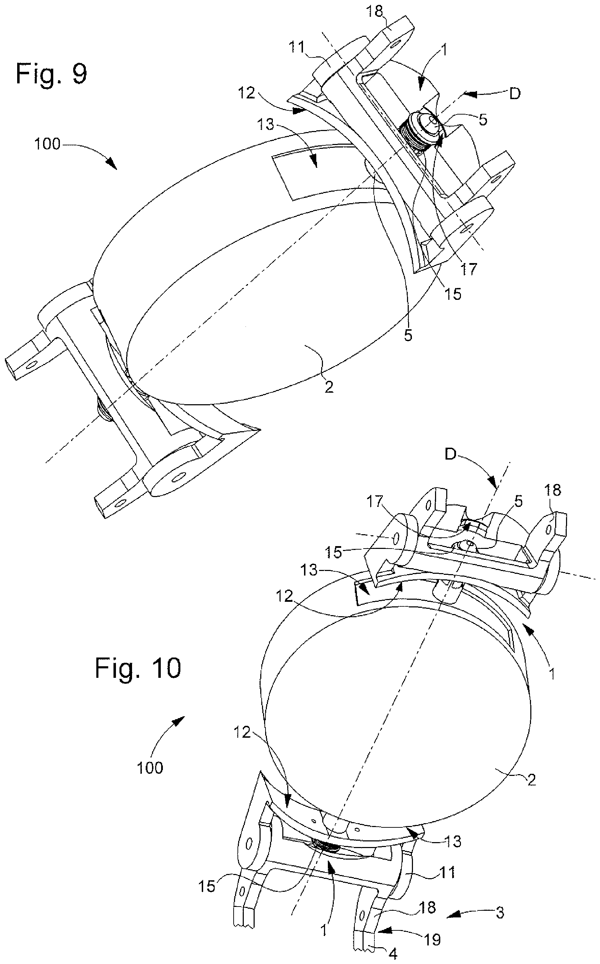

Dans un mode particulier de réalisation de l'invention représenté sur les figures, la cinématique de retournement du boîtier 2 se fait en deux temps : une action manuelle de l'utilisateur, par traction sur les brins du bracelet en écartement l'un par rapport à l'autre, fait pivoter le boîtier 2 sur un premier angle, par exemple environ un quart de tour, depuis une première position de repos représentée à la figure 6 jusqu'à la position représentée à la figure 9, puis l'action de rappel des moyens de rappel élastique 15 pilote le pivotement sur un deuxième angle, par exemple environ un second quart de tour, jusqu'à une deuxième position de repos opposée à la première. Naturellement ces angles ne sont qu'indicatifs, la cinématique peut être choisie librement, à condition de respecter une séquence constituée d'une course de déverrouillage, puis d'une course de pivotement du boîtier, qui est ici conjuguée avec une course de translation entre l'élément de guidage 5, notamment un arbre, et l'élément de guidage complémentaire 7, et enfin d'une course de verrouillage en fin de course.

Naturellement d'autres dispositions que celles illustrées par les figures peuvent être mises en place, et peuvent alors nécessiter des moyens de rappel éloignant le boîtier 2 au lieu de le rapprocher de l'élément de guidage complémentaire 7, selon la localisation de celui-ci et la configuration du système, sans pour autant s'éloigner de l'invention.

De façon avantageuse, les moyens de verrouillage mobiles 17 constituent aussi des moyens d'armage des moyens de rappel élastique 15.

Ces moyens de verrouillage mobiles 17 peuvent adopter plusieurs configurations, par exemple sous la forme d'un simple verrou ou poussoir.

De façon préférée, et tel qu'illustré par les figures, les moyens de verrouillage mobiles 17 sont ici solidaires d'un élément de fixation, notamment d'une chape 18, qui est mobile de façon articulée par rapport à l'élément de guidage complémentaire 7 ou au berceau 11, notamment en appui sur des cornes 110 de celui-ci. On emploie ici la dénomination chape, même si cet élément de fixation vient à prendre une autre forme que la forme usuelle en U d'une chape, qui est préférée dans l'application décrite ici. De préférence, l'articulation entre le berceau 11 ou l'élément de guidage complémentaire 7 d'une part, et la chape 18 d'autre part, se fait selon un axe d'articulation de direction sensiblement orthogonale par rapport à celle de l'axe de pivotement D,

Cette chape 18 est agencée pour être fixée à la structure porteuse 3, ou bien est constituée par une extrémité 19 de la structure porteuse 3. Elle peut notamment constituer l'extrémité d'une branche d'un bracelet 4, ou un maillon d'un tel bracelet 4, ou bien être fixée à une telle extrémité.

Pour revenir à la géométrie de la came 8, elle dépend bien sûr de la cinématique que l'on souhaite donner au mouvement du boîtier 2. Dans l'exemple de réalisation préféré illustré par les figures, la came 8 comporte autant de zones de fin de course 14 que de positions de repos du boîtier 2, soient deux dans le cas d'espèce illustré par les figures. Entre deux zones de fin de course 14 consécutives 14A; 14B, la came 8 a un profil de came 21 comportant successivement, dans le sens de parcours du doigt 9 sur la came 8 qui est un sens unique :
- depuis une première zone de fin de course 14A,
- une première course de dégagement 25 sensiblement parallèle à l'axe de pivotement D,
- un début de rampe 26,
- une rampe 22 sensiblement hélicoïdale autour de l'axe de pivotement D, - une fin de rampe 23 la plus éloignée de la première zone de fin de course 14A et constituant un point de rebroussement vers
- une piste de retour 24 sensiblement parallèle à l'axe de pivotement D se finissant,
- au voisinage d'une deuxième zone de fin de course 14B, par une zone d'inflexion 27
- puis par une piste de raccordement 28 vers la deuxième zone de fin de course 14B.

Dans une application préférée, le mécanisme de retournement 1 comporte, en symétrie selon l'axe de pivotement D et de part et d'autre du boîtier 2 ou de la nacelle 6 agencée pour recevoir le boîtier 2, deux arbres 5 chacun agencé pour être rapporté sur le boîtier 2 ou sur une nacelle 6 agencée pour recevoir le boîtier 2. Le mécanisme 1 comporte encore, agencé pour être fixé à la structure porteuse 3, et pour chaque élément de guidage 5, notamment un arbre, un élément de guidage complémentaire 7. Cet élément de guidage complémentaire 7 est agencé pour coopérer avec cet élément de guidage 5 par des surfaces de guidage complémentaires autorisant un déplacement en translation selon l'axe de pivotement D, ou/et en pivotement autour de l'axe de pivotement D, de l'élément de guidage 5 par rapport à l'élément de guidage complémentaire 7 sous l'action du mouvement relatif d'une came 8 que comporte l'élément de guidage 5, respectivement l'élément de guidage complémentaire 7, par rapport à un doigt 9 que comporte l'élément de guidage complémentaire 7, respectivement l'élément de guidage 5. Ainsi le boîtier 2 est parfaitement suspendu.

L'invention concerne encore une structure porteuse 3 pour pièce 100 d'horlogerie ou de bijouterie-joaillerie, cette structure 3 comportant au moins une chape 18 à laquelle est fixé un mécanisme de retournement 1. Notamment, cette structure porteuse 3 constitue un bracelet 4 comportant deux extrémités pour la fixation d'au moins un boîtier 2, dont au moins une des extrémités comporte un tel mécanisme de retournement 1.

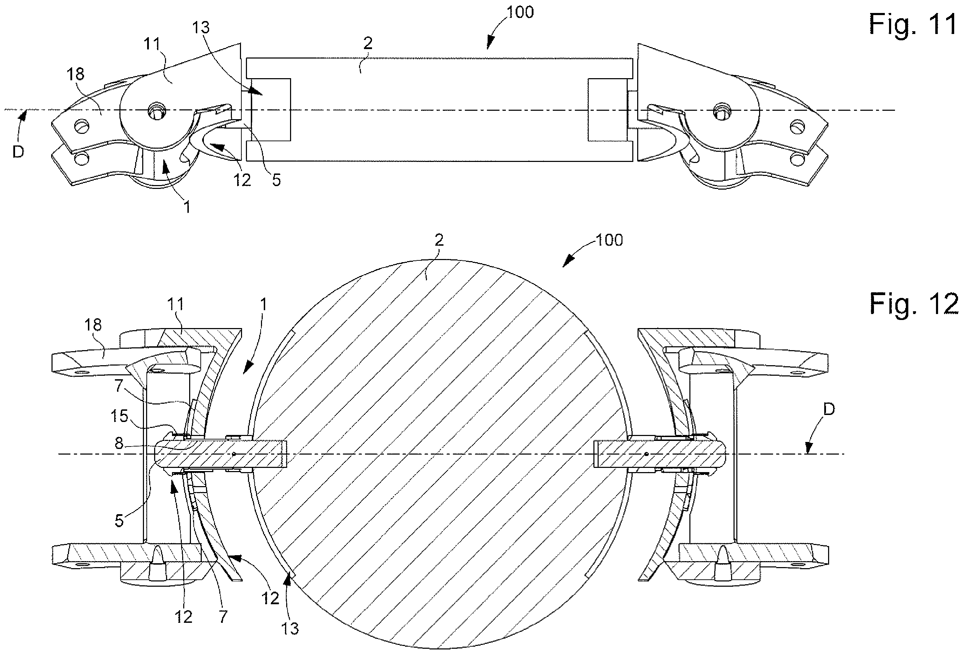

Et, de préférence, la structure porteuse 3 constitue un bracelet 4 comportant deux extrémités pour la fixation d'au moins un boîtier 2, chacune des extrémités comportant un tel mécanisme de retournement 1, tel que visible sur les figures 6 et 12. Sur la figure 12 les deux mécanismes 1 sont représentés symétriques, et comportent respectivement des arbres 5A, 5B, des éléments de guidage 7A, 7B, des berceaux 11A, 11B, des chapes 18A, 18B, les autres constituants n'ayant pas été renumérotés pour raison de simplification de la figure.

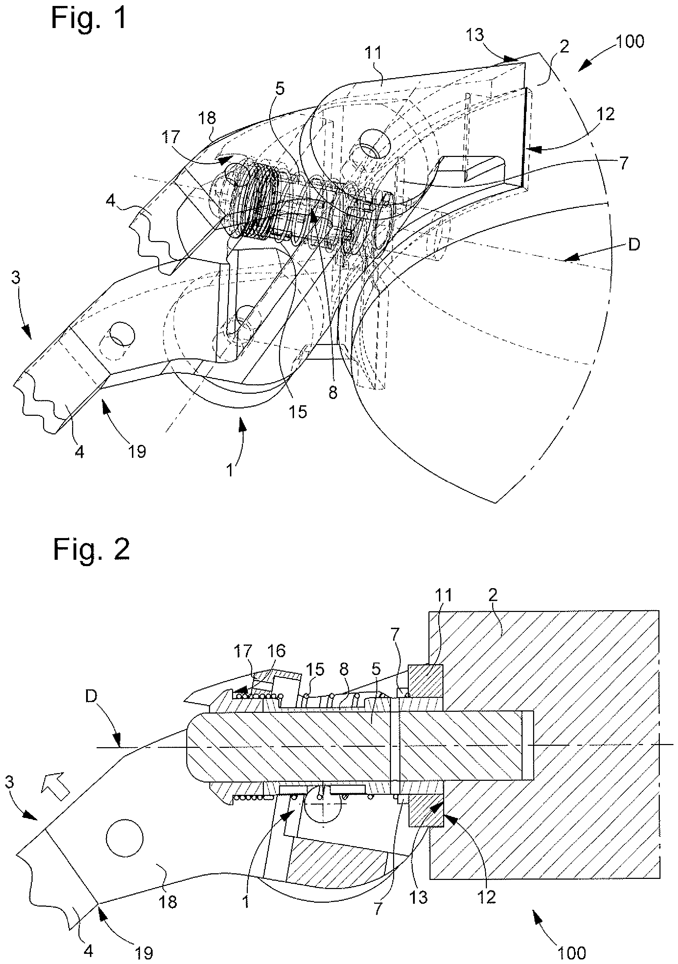

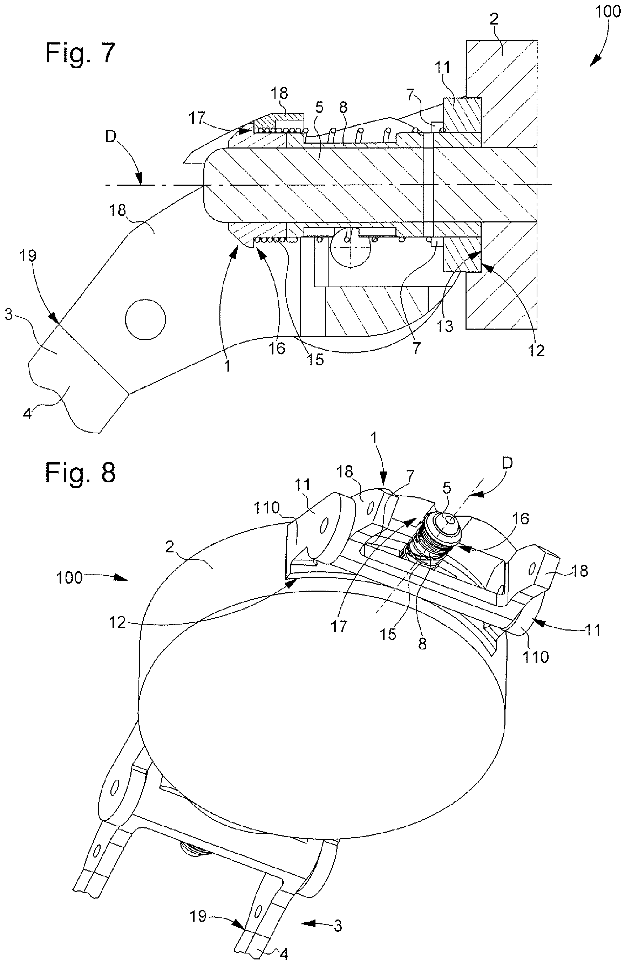

Avantageusement, la structure porteuse 3 comporte au moins une boucle déployante, ou un mécanisme agencé pour modifier sa circonférence entre une position déployée permettant son positionnement autour du poignet d'un utilisateur, et une position repliée permettant son maintien autour du poignet, selon une circonférence moindre que dans la position déployée. Il est ainsi très facile à l'utilisateur d'amorcer le mouvement de retournement du boîtier, qui va être décrit ci-après :
- la position de départ est une des positions de repos, illustrée par les figures 1, 6 et 7 ;
- l'utilisateur, portant la pièce 100 à son poignet, ouvre la boucle déployante s'il y en a une, ou du moins, met la structure porteuse 3, ou le bracelet 4 si c'est le cas, dans une position déployée qui autorise une mobilité du boîtier 2 dans une direction perpendiculaire à l'axe de pivotement D et au plan tangent au poignet de l'utilisateur ;
- l'utilisateur autorise la mobilité de la structure porteuse 3 pour effectuer une traction sur celle-ci, sensiblement dans la direction de l'axe de pivotement D ;
- tout en appuyant légèrement sur le boîtier 2, typiquement sur la glace s'il s'agit d'une montre, dans cette direction perpendiculaire décrite ci-dessus ;
- ces mouvements permettent d'assurer le déverrouillage des moyens de verrouillage 17, car lors du léger enfoncement du boîtier 2, la chape 18 se meut angulairement par rapport au berceau 11, et les moyens d'arrêt 16 libèrent le mouvement relatif de l'élément de guidage 5 par rapport à l'élément de guidage complémentaire 7, ce mouvement relatif est rendu possible, et est illustré par le passage successif dans les états illustrés par les figures 8 et 9;
- une légère traction sur les brins opposés du bracelet, de part et d'autre du boîtier 2, permet alors de commencer à faire pivoter l'élément de guidage 5 et donc le boîtier 2, par rapport à l'élément de guidage complémentaire 7 ;
- les moyens de rappel élastique 15 libèrent leur énergie pour rapprocher le boîtier 2 du berceau 11, et effectuer, sans action de l'utilisateur, le reste de la course de pivotement, le parcours de la rampe hélicoïdale 22 de la came permettant d'assurer le pivotement complet du boîtier 2, à 180° dans l'exemple des figures, le doigt est alors au point de rebroussement 23 ;
- il suffit ensuite à l'utilisateur de relâcher la traction sur le bracelet 4 ou sur la structure porteuse 3, le doigt 9 parcourt la piste 24 de retour en position indexée, puis la zone d'inflexion, pour arriver à la zone de fin de course 14 suivante, les moyens d'arrêt 16 sont à nouveau en prise sous l'action des moyens de verrouillage 17 qui sont à nouveau armés, le boîtier 2 est alors dans une seconde position de repos opposée à la position de repos de départ;
- l'utilisateur n'a plus qu'à ramener la structure porteuse 3 en position repliée, tout simplement en fermant la boucle déployante.

Dans cette réalisation préférée, le boîtier 2 pivote toujours dans le même sens.

Le pivotement du boîtier est ainsi effectué par le mécanisme 1 seul, sans aucune aide manuelle au pivotement, et en toute sécurité.

Dans cette variante préférée de réalisation, le mécanisme de retournement 1 est extérieur à la carrure de la pièce d'horlogerie, ce qui permet d'éviter tout problème d'étanchéité. Mais il est naturellement imaginable de transposer l'invention à l'intérieur de la carrure. Il est également possible de l'équiper, en variante, d'un poussoir, par exemple au niveau d'une corne, pour commander le mouvement de translation et de pivotement de la boîte 2.

Grâce à l'invention ce retournement peut être effectué sans retirer la pièce du poignet.

L'invention concerne encore une pièce 100 d'horlogerie ou de bijouterie-joaillerie, comportant au moins un boîtier 2 pivotant, autour d'un axe de pivotement D, entre au moins deux positions de repos, et comportant au moins un tel mécanisme de retournement 1.

De préférence, cette pièce 100 d'horlogerie ou de bijouterie-joaillerie comporte une telle structure porteuse 3.

Dans une application préférée et illustrée par les figures, la pièce 100 d'horlogerie ou de bijouterie-joaillerie est une montre-bracelet, et le boîtier 2 est un boîtier de montre comportant au moins un mouvement d'horlogerie, et qui comporte au moins deux faces différentes, chacune visible dans une des positions de repos.

## Revendications

1. Mécanisme de retournement (1) en pivotement, autour d'un axe de pivotement (D), entre au moins deux positions de repos, d'un boîtier (2), par rapport à une structure porteuse (3), ledit mécanisme (1) comportant au moins un élément de guidage (5), notamment un arbre, agencé pour être rapporté sur ledit boîtier (2) ou sur une nacelle (6) agencée pour recevoir ledit boîtier (2), et en ce qu'il comporte, agencé pour être fixé à ladite structure porteuse (3), un élément de guidage complémentaire (7) qui est agencé pour coopérer avec ledit élément de guidage (5), par des surfaces de guidage complémentaires autorisant un déplacement en translation selon ledit axe de pivotement (D) ou/et en pivotement autour dudit axe de pivotement (D) dudit élément de guidage (5), par rapport audit élément de guidage complémentaire (7) sous l'action du mouvement relatif d'une came (8) que comporte ledit élément de guidage (5), respectivement ledit élément de guidage complémentaire (7), par rapport à un doigt (9) que comporte ledit élément de guidage complémentaire (7), respectivement ledit élément de guidage (5), ledit mécanisme de retournement comportant entre ledit élément de guidage (5), et ledit élément de guidage complémentaire (7), des moyens de rappel élastique (15) pour créer un déplacement relatif entre ledit boîtier (2) et ledit élément de guidage complémentaire (7) et constituant des moyens moteurs agencés pour mettre en mouvement ladite came (8) par rapport audit doigt (9), et pour assurer le déplacement relatif de ladite came (8) par rapport audit doigt (9) et le pivotement dudit boîtier (2), ledit boîtier (2) étant mobile, sous une action manuelle de l'utilisateur sur un premier angle depuis une première position de repos jusqu'à une position intermédiaire, et, sous l'action de rappel desdits moyens de rappel élastique (15) sur un deuxième angle depuis ladite position intermédiaire jusqu'à une deuxième position de repos opposée à ladite première position de repos, **caractérisé en ce que** ladite came (8) comporte deux pistes opposées à 180° par rapport à l'axe de pivotement, coopérant chacune avec ledit doigt.

2. Mécanisme de retournement (1) selon la revendication 1, **caractérisé en ce qu'**il comporte, fixé audit élément de guidage complémentaire (7), au moins un berceau (11) comportant au moins une surface de réception (12) agencée pour coopérer de façon complémentaire, dans au moins une desdites positions de repos dudit boîtier (2), avec une surface d'appui (13) que comporte, selon le cas, ledit boîtier (2) ou ladite nacelle (6) agencée pour recevoir ledit boîtier (2), chaque dite position de repos correspondant à une zone de fin de course (14) de ladite came (8).

3. Mécanisme de retournement (1) selon la revendication 2, **caractérisé en ce qu'**il comporte des moyens de verrouillage mobiles (17), qui sont agencés pour, dans une position de verrouillage, coopérer avec des moyens d'arrêt (16) que comporte ledit élément de guidage (5), notamment un arbre, pour maintenir ladite surface d'appui (13) en appui sur ladite surface de réception (12), et pour, dans une position de déverrouillage, autoriser l'éloignement relatif de ladite surface d'appui (13) par rapport à ladite surface de réception (12).

4. Mécanisme de retournement (1) selon l'une des revendications précédentes, **caractérisé en ce que** des moyens de rappel élastique (15) tendent à rapprocher ledit boîtier (2) dudit élément de guidage complémentaire (7).

5. Mécanisme de retournement (1) selon la revendication 3, **caractérisé en ce que** lesdits moyens de verrouillage mobiles (17) constituent des moyens d'armage desdits moyens de rappel élastique (15).

6. Mécanisme de retournement (1) selon la revendication 3, **caractérisé en ce que** lesdits moyens de verrouillage mobiles (17) sont solidaires d'une chape (18) mobile de façon articulée par rapport audit élément de guidage complémentaire (7) ou audit berceau (11).

7. Mécanisme de retournement (1) selon la revendication 6, **caractérisé en ce que** ladite chape (18) est agencée pour être fixée à ladite structure porteuse (3), ou bien est constituée par une extrémité (19) de ladite structure porteuse (3).

8. Mécanisme de retournement (1) selon l'une des revendications précédentes, **caractérisé en ce que** ladite came (8) comporte autant de zones de fin de course (14) que de dites positions de repos dudit boîtier (2), et que, entre deux dites zones de fin de course (14) consécutives (14A; 14B), elle a un profil de came (21) comportant successivement, dans le sens de parcours dudit doigt (9) sur ladite came (8) qui est un sens unique, depuis une première zone de fin de course (14A), une première course de dégagement (25) sensiblement parallèle audit axe de pivotement (D), un début de rampe (26), une rampe (22) sensiblement hélicoïdale autour dudit axe de pivotement (D), une fin de rampe (23) la plus éloignée de ladite première zone de fin de course (14A) et constituant un point de rebroussement vers une piste de retour (24) sensiblement parallèle audit axe de pivotement (D) se finissant, au voisinage d'une deuxième zone de fin de course (14B), par une zone d'inflexion (27) puis par une piste de raccordement (28) vers ladite deuxième zone de fin de course (14B).

9. Mécanisme de retournement (1) selon l'une des revendications précédentes, **caractérisé en ce qu'**il comporte, en symétrie selon ledit axe de pivotement (D) et de part et d'autre dudit boîtier (2) ou de ladite nacelle (6) agencée pour recevoir ledit boîtier (2), deux dits éléments de guidage (5) ou arbres chacun agencé pour être rapporté sur ledit boîtier (2) ou sur une nacelle (6) agencée pour recevoir ledit boîtier (2), et **en ce qu'**il comporte, agencé pour être fixé à ladite structure porteuse (3), et pour chaque dit élément de guidage (5) ou arbre, un dit élément de guidage complémentaire (7) qui est agencé pour coopérer avec ledit élément de guidage (5), par des surfaces de guidage complémentaires autorisant un déplacement en translation selon ledit axe de pivotement (D) ou/et en pivotement autour dudit axe de pivotement (D) dudit élément de guidage (5), par rapport audit élément de guidage complémentaire (7) sous l'action du mouvement relatif d'une came (8) que comporte ledit élément de guidage (5), notamment un arbre, respectivement ledit élément de guidage complémentaire (7), par rapport à un doigt (9) que comporte ledit élément de guidage complémentaire (7), respectivement ledit élément de guidage (5).

10. Structure porteuse (3) pour pièce (100) d'horlogerie ou de bijouterie-joaillerie, comportant au moins une chape (18) à laquelle est fixé un mécanisme de retournement (1) selon l'une des revendications 1 à 9.

11. Structure porteuse (3) selon la revendication 10, **caractérisée en ce qu'**elle constitue un bracelet (4) comportant deux extrémités pour la fixation d'au moins un boîtier (2), dont au moins une desdites extrémités comporte un mécanisme de retournement (1) selon l'une des revendications 1 à 9.

12. Structure porteuse (3) selon la revendication 11, **caractérisée en ce qu'**elle constitue un bracelet (4) comportant deux extrémités pour la fixation d'au moins un boîtier (2), chacune desdites extrémités comportant un mécanisme de retournement (1) selon l'une des revendications 1 à 9.

13. Structure porteuse (3) selon l'une des revendications 10 à 12, **caractérisée en ce qu'**elle comporte au moins une boucle déployante ou un mécanisme agencé pour modifier sa circonférence entre une position déployée permettant son positionnement autour du poignet d'un utilisateur, et une position repliée permettant son maintien autour dudit poignet, selon une circonférence moindre que dans ladite position déployée.

14. Pièce (100) d'horlogerie ou de bijouterie-joaillerie, comportant au moins un boîtier (2) pivotant, autour d'un axe de pivotement (D), entre au moins deux positions de repos, et comportant au moins un mécanisme de retournement (1) selon l'une des revendications 1 à 9.

15. Pièce (100) d'horlogerie ou de bijouterie-joaillerie selon la revendication 14, **caractérisée en ce qu'**elle comporte une structure porteuse (3) selon l'un des revendications 10 à 13.

16. Pièce (100) d'horlogerie ou de bijouterie-joaillerie selon la revendication 14 ou 15, **caractérisée en ce qu'**elle est une montre-bracelet, et que ledit boîtier (2) est un boîtier de montre comportant au moins un mouvement d'horlogerie, et comporte au moins deux faces différentes, chacune visible dans une desdites positions de repos.

## Patentansprüche

1. Wendemechanismus (1), unter Drehung eines Gehäuses (2) in Bezug auf eine Tragstruktur (3) um eine Drehachse (D) zwischen mindestens zwei Ruhepositionen, wobei der Mechanismus (1) mindestens ein Führungselement (5), insbesondere eine Welle, umfasst, das dafür ausgelegt ist, an das Gehäuse (2) oder eine Schale (6), die dafür ausgelegt ist, das Gehäuse (2) aufzunehmen, angefügt zu werden, und dass er ein komplementäres Führungselement (7) umfasst, das dafür ausgelegt ist, an der Tragstruktur (3) befestigt zu werden, und dafür ausgelegt ist, mit dem Führungselement (5) über komplementäre Führungsoberflächen zusammenzuwirken, die eine translatorische Verschiebung entlang der Drehachse (D) und/oder eine Drehung um die Drehachse (D) des Führungselements (5) in Bezug auf das komplementäre Führungselement (7) zulassen unter der Wirkung der Relativbewegung eines Nockens (8), den das Führungselement (5) oder entsprechend das komplementäre Führungselement (7) aufweist, in Bezug auf einen Finger (9), den das komplementäre Führungselement (7) oder entsprechend das Führungselement (5) aufweist, wobei der Wendemechanismus zwischen dem Führungselement (5) und dem komplementären Führungselement (7) elastische Rückstellmittel (15) umfasst, um eine relative Verschiebung zwischen dem Gehäuse (2) und dem komplementären Führungselement (7) zu erzeugen, die Antriebsmittel bilden, um den Nocken (8) in Bezug auf den Finger (9) in Bewegung zu setzen und um die relative Verschiebung des Nockens (8) in Bezug auf den Finger (9) und die Drehung des Gehäuses (2) sicherzustellen, wobei das Gehäuse (2) durch eine manuelle Einwirkung des Benutzers auf eine erste Ecke von einer ersten Ruheposition bis in eine Zwischenposition und unter der Rückstellwirkung der elastischen Rückstellmittel (15) auf eine zweite Ecke von der Zwischenposition bis in eine zweite Ruheposition gegenüber der ersten Ruheposition beweglich ist, **dadurch gekennzeichnet, dass** der Nocken (8) zwei Kurven aufweist, die in Bezug auf die Drehachse um 180° versetzt sind und jeweils mit dem Finger zusammenwirken.

2. Wendemechanismus (1) nach Anspruch 1, **dadurch gekennzeichnet, dass** er mindestens einen Träger (11) umfasst, der an dem komplementären Führungselement (7) befestigt ist und mindestens eine Aufnahmeoberfläche (12) aufweist, die dafür ausgelegt ist, in mindestens einer der Ruhepositionen des Gehäuses (2) auf komplementäre Weise mit einer Abstützoberfläche (13) zusammenzuwirken, die je nach Fall das Gehäuse (2) oder die Schale (6), die dafür ausgelegt ist, das Gehäuse (2) aufzunehmen, umfasst, wobei jede Ruheposition einem Bahnendbereich (14) des Nockens (8) entspricht.

3. Wendemechanismus (1) nach Anspruch 2, **dadurch gekennzeichnet, dass** er bewegliche Verriegelungsmittel (17) umfasst, die dafür ausgelegt sind, in einer Verriegelungsposition mit Anschlagmitteln (16) zusammenzuwirken, die das Führungselement (5), insbesondere eine Welle, aufweist, um die Abstützoberfläche (13) abgestützt an der Aufnahmeoberfläche (12) zu halten, und in einer Entriegelungsposition die relative Entfernung der Abstützoberfläche (13) in Bezug auf die Aufnahmeoberfläche (12) zuzulassen.

4. Wendemechanismus (1) nach einem der vorhergehenden Ansprüche, **dadurch gekennzeichnet, dass** elastische Rückstellmittel (15) bestrebt sind, das Gehäuse (2) an das komplementäre Führungselement (7) anzunähern.

5. Wendemechanismus (1) nach Anspruch 3, **dadurch gekennzeichnet, dass** die beweglichen Verriegelungsmittel (17) Spannmittel der elastischen Rückstellmittel (15) bilden.

6. Wendemechanismus (1) nach Anspruch 3, **dadurch gekennzeichnet, dass** die beweglichen Verriegelungsmittel (17) mit einem beweglichen Bügel (18) so verbunden sind, dass sie in Bezug auf das komplementäre Führungselement (7) oder den Träger (11) angelenkt sind.

7. Wendemechanismus (1) nach Anspruch 6, **dadurch gekennzeichnet, dass** der Bügel (18) dafür ausgelegt ist, an der Tragstruktur (3) befestigt zu werden, oder durch ein Ende (17) der Tragstruktur (3) gebildet ist.

8. Wendemechanismus (1) nach einem der vorhergehenden Ansprüche, **dadurch gekennzeichnet, dass** der Nocken (8) ebenso viele Bahnendbereiche (14) aufweist, wie Ruhepositionen des Gehäuses (2) vorhanden sind, und dass er zwischen zwei aufeinander folgenden (14A; 14B) Bahnendbereichen (14) ein Nockenprofil (21) besitzt, das nacheinander in Laufrichtung des Fingers (9) auf dem Nocken (8), die eine eindeutige Richtung ist, ausgehend von einem ersten Bahnendbereich (14A) eine erste Ablösebahn (25), die zu der Drehachse (D) im Wesentlichen parallel ist, einen Rampenanfang (26), eine Rampe (22), die um die Drehachse (D) im Wesentlichen schraubenlinienförmig ist, und ein Rampenende (23) umfasst, das von dem ersten Bahnendbereich (14A) am weitesten entfernt ist und einen Umkehrpunkt zu einer Rücklaufkurve (24) bildet, die zu der Drehachse (D) im Wesentlichen parallel ist und in der Umgebung eines zweiten Bahnendbereichs (14B) in einem Biegungsbereich (27) und dann in einer Verbindungskurve (28) mit dem zweiten Bahnendbereich (14B) endet.

9. Wendemechanismus (1) nach einem der vorhergehenden Ansprüche, **dadurch gekennzeichnet, dass** er symmetrisch längs der Drehachse (D) und auf beiden Seiten des Gehäuses (2) oder der Schale (6), die dafür ausgelegt ist, das Gehäuse (2) aufzunehmen, zwei Führungselemente (5) oder Wellen umfasst, wovon jedes/jede dazu ausgelegt ist, an das Gehäuse (2) oder an eine Schale (6), die dafür ausgelegt ist, das Gehäuse (2) aufzunehmen, angefügt zu werden, und dass er für jedes Führungselement (5) oder jede Welle ein komplementäres Führungselement (7) umfasst, das dafür ausgelegt ist, an der Tragstruktur (3) befestigt zu werden, und dafür ausgelegt ist, mit dem Führungselement (5) über komplementäre Führungsoberflächen zusammenzuwirken, die eine translatorische Verschiebung entlang der Drehachse (D) und/oder eine rotatorische Verschiebung um die Drehachse (D) des Führungselements (5) zulassen in Bezug auf das komplementäre Führungselement (7) unter der Wirkung der Relativbewegung eines Nockens (8), den das Führungselement (5), insbesondere eine Welle, oder entsprechend das komplementäre Führungselement (7) aufweist, in Bezug auf einen Finger (9), den das komplementäre Führungselement (7) oder entsprechend das Führungselement (5) aufweist.

10. Tragstruktur (3) für ein Zeitmessgerät (100) oder Schmuck/Juwelier-Stück, die mindestens einen Bügel (18) aufweist, an dem ein Wendemechanismus (1) nach einem der Ansprüche 1 bis 9 befestigt ist.

11. Tragstruktur (3) nach Anspruch 10, **dadurch gekennzeichnet, dass** sie ein Armband (4) bildet, das zwei Enden für die Befestigung mindestens eines Gehäuses (2) aufweist, wobei mindestens eines der Enden einen Wendemechanismus (1) nach einem der Ansprüche 1 bis 9 umfasst.

12. Tragstruktur (3) nach Anspruch 11, **dadurch gekennzeichnet, dass** sie ein Armband (4) bildet, das zwei Enden für die Befestigung mindestens eines Gehäuses (2) aufweist, wobei jedes der Enden einen Wendemechanismus (1) nach einem der Ansprüche 1 bis 9 umfasst.

13. Tragstruktur (3) nach einem der Ansprüche 10 bis 12, **dadurch gekennzeichnet, dass** sie mindestens eine aufklappbare Schließe oder einen Mechanismus umfasst, der dafür ausgelegt ist, seinen Umfang zwischen einer ausgeklappten Position, die seine Positionierung um das Gelenk eines Benutzers ermöglicht, und einer eingeklappten Position zu verändern, die seinen Halt um das Handgelenk mit einem Umfang, der kleiner als in der ausgeklappten Position ist, ermöglicht.

14. Zeitmessgerät (100) oder Schmuck/Juwelier-Stück, umfassend mindestens ein Gehäuse (2), das sich um eine Drehachse (D) zwischen mindestens zwei Ruhepositionen dreht und umfassend mindestens einen Wendemechanismus (1) nach einem der Ansprüche 1 bis 9.

15. Zeitmessgerät (100) oder Schmuck/Juwelier-Stück nach Anspruch 14, **dadurch gekennzeichnet, dass** es eine Tragstruktur (3) nach einem der Ansprüche 10 bis 13 umfasst.

16. Zeitmessgerät (10) oder Schmuck/Juwelier-Stück nach Anspruch 14 oder 15, **dadurch gekennzeichnet, dass** es eine Armbanduhr ist und dass das Gehäuse (2) ein Uhrengehäuse ist, das mindestens ein Uhrwerk umfasst und mindestens zwei verschiedene Flächen aufweist, wovon jede in einer der Ruhepositionen sichtbar ist.

## Claims

1. Swivel mechanism (1) for turning over a case (2) about a pivot axis (D), between at least two rest positions, with respect to a support structure (3), said mechanism (1) comprising at least one guide element (5), particularly an arbour, arranged to be secured to said case (2) or to a pod (6) arranged for receiving said case (2), and in that it includes a complementary guide element (7), which is arranged such that it is secured to said support structure (3) and to cooperate with said guide element (5) via complementary guide surfaces allowing said guide element (5) to make a movement of translation along said pivot axis (D) and/or to pivot about said pivot axis (D) with respect to said complementary guide element (7) under the effect of the relative movement of a cam (8) respectively comprised in said guide element (5) or complementary guide element (7), relative to a finger (9) respectively comprised in said complementary guide element (7) or said guide element (5), said turning over mechanism comprising, between said guide element (5) and said complementary guide element (7), an elastic return means (15) for creating a relative movement between said case (2) and said complementary guide element (7) and forming a drive means for setting said cam (8) in motion relative to said finger (9), and to ensure the relative movement of said cam (8) with respect to said finger (9) and the pivoting of said case (2), said case (2) being capable of moving, under a manual action from the user over a first angle from a first rest position as far as an intermediate position, and, under the returning action of said elastic return means (15) over a second angle from said intermediate position as far as a second rest position opposite said first rest position, **characterized in that** said cam (8) includes two opposing paths at 180° to the pivot axis, each cooperating with said finger.

2. Turning over mechanism (1) according to claim 1, **characterized in that**, secured to said complementary guide element (7) the mechanism includes at least one cradle (11) including at least one receiving surface (12) arranged to cooperate in a complementary manner, in at least one of said rest positions of said case (2), with a bearing surface (13) comprised, as appropriate, in said case (2) or said pod (6) arranged for receiving said case (2), each said rest position corresponding to an end-of-travel zone (14) of said cam (8).

3. Turning over mechanism (1) according to claim 2, **characterized in that** it includes a moveable locking means (17) which is arranged to cooperate, in a locking position, with a stop means (16) comprised in said guide element (5), particularly an arbour, to hold said bearing surface (13) in abutment on said receiving surface (12) and, in an unlocking position, to allow the relative movement of said bearing surface (13) away from said receiving surface (12).

4. Turning-over mechanism (1) according to any of the preceding claims, **characterized in that** the elastic return means (15) tends to move said case (2) closer to said complementary guide element (7).

5. Turning-over mechanism (1) according to claim 3, **characterized in that** said moveable locking means (17) forms a means of winding said elastic return means (15).

6. Turning-over mechanism (1) according to claim 3, **characterized in that** said moveable locking means (17) is integral with a moveable clevis (18) which is hinged relative to said complementary guide element (7) or said cradle (11).

7. Turning-over mechanism (1) according to claim 6, **characterized in that** said clevis (18) is arranged to be secured to said support structure (3), or is formed by one end (19) of said support structure (3).

8. Turning-over mechanism (1) according to one of the preceding claims, **characterized in that** said cam (8) includes as many end-of-travel zones (14) as there are rest positions of said case (2), and that, between two consecutive (14A; 14B) end-of-travel zones (14), said cam has a cam profile (21), which includes in sequence, in the unidirectional direction of travel of said finger (9) on said cam (8), from a first end-of-travel zone (14A) a first release travel (25) substantially parallel to said pivot axis (D), the start of a ramp (26), a substantially helical ramp (22) around said pivot axis (D), a ramp end (23) which is the farthest from said first end-of-travel zone (14A) and forms the turning point for a return path (24) substantially parallel to said pivot axis (D) ending, in proximity to a second end-of-travel zone (14B) in a change of direction zone (27), then a connecting path (28) towards said second end-of-travel zone (14B).

9. Turning-over mechanism (1) according to one of the preceding claims, **characterized in that** it includes, symmetrically along said pivot axis (D) on both sides of said case (2) or said pod (6) arranged for receiving said case (2), two said guide elements (5) or arbours each arranged to be added to said case (2) or to a pod (6) arranged for receiving said case (2), and **in that** it includes one said complementary guide element (7), which is arranged to be fixed to said support structure (3), for each said guide element (5) or arbour, and to cooperate with said guide element (5) via complementary guide surfaces allowing said guide element (5) to make a movement of translation along said pivot axis (D) and/or to pivot about said pivot axis (D) relative to said complementary guide element (7) under the effect of the relative movement of a cam (8) respectively comprised in said guide element (5), particularly an arbour, or said complementary guide element (7) relative to a finger (9) respectively comprised in said complementary guide element (7) or said guide element (5).

10. Support structure (3) for a timepiece (100) or piece of jewellery comprising at least one clevis (18) to which is fixed a turning-over mechanism (1) according to one of claims 1 to 9.

11. Support structure (3) according to claim 10, **characterized in that** it forms a bracelet (4) comprising two ends for securing at least one case (2), wherein at least one of said ends comprises a turning-over mechanism (1) according to one of claims 1 to 9.

12. Support structure (3) according to claim 11, **characterized in that** it forms a bracelet (4) comprising two ends for securing at least one case (2), each of said ends comprising a turning-over mechanism (1) according to one of claims 1 to 9.

13. Support structure (3) according to one of claims 10 to 12, **characterized in that** it includes at least one unfolding buckle or a mechanism arranged to change the circumference thereof between an unfolded position, allowing positioning around a user's wrist and a folded position, allowing said structure to be held around said wrist, with a smaller circumference than in said unfolded position.

14. Timepiece or piece of jewellery (100) comprising at least one case (2) pivoting about a pivot axis (D) between at least two rest positions and comprising at least one turning-over mechanism (1) according to one of claims 1 to 9.

15. Timepiece or piece of jewellery (100) according to claim 14, **characterized in that** it includes a support structure (3) according to one of claims 10 to 13.

16. Timepiece or piece of jewellery (100) according to claim 14 or 15, **characterized in that** it is a wristwatch and **in that** said case (2) is a watch case which comprises at least one timepiece movement and includes at least two different faces, each visible in one of said rest positions.
